# EUROPÄISCHE PATENTSCHRIFT

(11) **EP 1 920 668 B1**
(45) Veröffentlichungstag und Bekanntmachung des Hinweises auf die Patenterteilung: **29.08.2012**
(21) Anmeldenummer: 07075996.4
(22) Anmeldetag: 13.11.2007
(51) Int. Cl.: A24C 5/35, A24D 3/02

(54) **Speichervorrichtung und Verfahren zum Vermindern eines lokalen Drucks in einer Speichervorrichtung**
Storage device and method for reducing local pressure in a storage device
Dispositif de stockage et procédé destiné à éviter une pression locale dans un dispositif de stockage

(30) Priorität: 13.11.2006 DE 102006053687
(43) Veröffentlichungstag der Anmeldung: 14.05.2008
(73) Patentinhaber: Hauni Maschinenbau AG, 21033 Hamburg (DE)
(72) Erfinder: Haul, Michael, 21529 Kröppelshagen (DE); Hartmann, Bernd, 22955 Hoisdorf (DE)
(74) Vertreter: Stork Bamberger

(56) Entgegenhaltungen:
- EP-A1- 0 658 318
- EP-A1- 0 959 008
- DE-B1- 1 532 271
- GB-A- 1 127 062
- GB-A- 2 165 812
- US-A- 4 365 702

## Beschreibung

Die Erfindung betrifft eine Speichervorrichtung zum Speichern queraxial-parallel ausgerichteter stabförmiger Artikel der Tabak verarbeitenden Industrie, insbesondere von Filterstäben, die einen Magazinabschnitt mit einem Zuführungsbereich, dem über einen Zuführungsweg eine Zuführungseinheit zugeordnet ist, und einem Entnahmebereich, dem über einen Entnahmeweg eine Entnahmeeinheit zugeordnet ist, umfasst. Eine Speichervorrichtung ist aus GB-A-2 165 812 bekannt.

Die Erfindung betrifft ferner die Verwendung eines Transportelements in einem Magazinabschnitt einer Speichervorrichtung für queraxial-parallel ausgerichtete stabförmige Artikel der Tabak verarbeitenden Industrie, insbesondere von Filterstäben, zum Vermindern eines auf die stabförmigen Artikel wirkenden lokalen Drucks.

Schließlich betrifft die Erfindung ein Verfahren zum Vermindern eines infolge des Zuführens von stabförmigen Artikeln der Tabak verarbeitenden Industrie, insbesondere von Filterstäben, mittels einer Zuführungseinheit in den unteren Teilbereich eines Magazinabschnitts einer Speichervorrichtung entstehenden und auf die stabförmigen Artikel wirkenden lokalen Drucks in einem der Zuführungseinheit zugeordneten Zuführungsbereich sowie ein Verfahren zum Speichern von stabförmigen Artikeln der Tabak verarbeitenden Industrie, insbesondere von Filterstäben, in einem Magazinabschnitt einer Speichervorrichtung.

Die Verarbeitung von stabförmigen Artikeln - etwa die Herstellung, Lagerung, Konfektionierung und Weiterverarbeitung von Zigaretten und Filterstäben - unterteilt sich häufig in einzelne Verarbeitungsschritte, die hintereinander durchgeführt werden.

Die Notwendigkeit, eine feste zeitliche Abfolge der einzelnen Schritte einzuhalten, führt in der Regel dazu, dass der Ablauf des gesamten Verarbeitungsprozesses beeinträchtigt wird, wenn Verzögerungen bei der Durchführung auch nur eines einzelnen dieser Schritte auftreten. Um die Auswirkungen dieser Beeinträchtigung so gering wie möglich zu halten und den gesamten Verarbeitungsablauf möglichst wenig zu verlangsamen, können die stabförmigen Artikel zwischen einzelnen dieser Schritte temporär in Speichervorrichtungen zwischengespeichert werden, so dass die Verzögerung eines einzelnen Schritts zunächst nicht unmittelbar die Verzögerung nachfolgender Verfahrensschritte zur Folge haben muss. Darüber hinaus können mit derartigen Speichervorrichtungen auch geringfügige Abweichungen bei der zeitlichen Koordinierung der Übergabe der stabförmigen Artikel in zwei aufeinander folgenden Verfahrensschritten ausgeglichen werden.

In Abhängigkeit von dem in der Verarbeitungsanlage verfügbaren Platz kann eine derartige Speichervorrichtung für das Speichern der stabförmigen Artikel zum Auffüllen in horizontaler Richtung oder in vertikaler Richtung ausgebildet sein. Bei einem Auffüllen in horizontale Richtung wird der verfügbare Speicherbereich in horizontaler Richtung erweitert, wohingegen bei einem Auffüllen in vertikaler Richtung der verfügbare Speicherbereich jeweils nach oben erweitert wird; letztere Anordnung gelangt insbesondere dann zum Einsatz, wenn anlagenbedingt für das Speicherelement nur eine geringe Einbaufläche zur Verfügung steht.

Bei vertikal erweiterbaren Speichervorrichtungen wird der Speicherbereich vertikal aufgebaut: Nur eine begrenzte Anzahl der zu speichernden stabförmigen Artikel findet jeweils in einer horizontalen Lage queraxial-parallel ausgerichteter stabförmiger Artikel Platz, beim Auffüllen des zum Speichern vorgesehenen Magazinabschnitts werden die stabförmigen Artikel zusätzlich vertikal angeordnet. Folglich ist der jeweilige Füllstand im Magazinabschnitt um so höher, je mehr stabförmige Artikel im Speicher gespeichert sind. Daher nimmt mit dem Füllstand des Magazinabschnitts auch der lokale Druck, der infolge des Eigengewichts der gespeicherten stabförmigen Artikel auf die im unteren Teilbereich des Magazinabschnitts gespeicherten stabförmigen Artikel wirkt, beim Zuführen weiterer stabförmiger Artikel in den Magazinabschnitt zu, wodurch es zu einer Beschädigung der gespeicherten stabförmigen Artikel kommen kann.

Zusätzlich zu der lokalen Druckzunahme aufgrund des Eigengewichts der stabförmigen Artikel tritt eine weitere lokale Druckzunahme auf, wenn die Zuführung der stabförmigen Artikel nicht stets von oben, also von einer Zuführungsöffnung oberhalb des oberen Endes des Füllbereichs, sondern innerhalb des mit gespeicherten stabförmigen Artikeln befüllten Bereichs des Magazinabschnitts erfolgt, also im Füllbereich des Magazinabschnitts, das heißt im Speicherstapel der stabförmigen Artikel. In diesem Fall erfolgt das Zuführen zu speichernder stabförmiger Artikel gegen das Eigengewicht und den Widerstand bereits gespeicherter stabförmiger Artikel, so dass die stabförmigen Artikel nur mit einem hohen Pressdruck dem Magazinabschnitt zugeführt werden können. Da sich der Pressdruck im Füllbereich nicht vollständig abbaut, sondern vielmehr lokal im Zuführungsbereich erhalten bleibt, erfordert ein nachfolgendes Zuführen weiterer Artikel einen noch höheren Pressdruck, so dass der lokale Druck gerade im Zuführungsbereich besonders stark ansteigt, was eine Beschädigung der dort gespeicherten stabförmigen Artikel zur Folge hat.

Eine Aufgabe der vorliegenden Erfindung ist es daher, eine Vorrichtung zur Verfügung zu stellen, die diese Nachteile beseitigt, die insbesondere ein Speichern von queraxial-parallel ausgerichteten stabförmigen Artikeln der Tabak verarbeitenden Industrie, insbesondere von Filterstäben, in einem Magazinabschnitt ermöglicht, ohne dass die stabförmigen Artikel infolge der Zunahme der Menge an gespeicherten stabförmigen Artikeln beschädigt werden. Gemäß einer weiteren Aufgabe der vorliegenden Erfindung wird ferner eine Möglichkeit zum Vermindern eines auf stabförmige Artikel in einem Magazinabschnitt einer Speichervorrichtung wirkenden lokalen Drucks gesucht. Eine weitere Aufgabe der Erfindung besteht schließlich darin, ein Verfahren zum Vermindern eines lokalen Drucks, der infolge des Zuführens von stabförmigen Artikeln mittels einer Zuführungseinheit in den unteren Teilbereich eines Magazinabschnitts einer Speichervorrichtung entsteht und auf die stabförmigen Artikel wirkt, sowie ein Verfahren zum Speichern von stabförmigen Artikeln zur Verfügung zu stellen.

Diese Aufgabe wird erfindungsgemäß durch ein Gerät gemäß Anspruch 1 gelöst, bei dem die Speichervorrichtung weiterhin eine Entlastungseinheit zur Verminderung eines auf die stabförmigen Artikel wirkenden lokalen Drucks in dem Magazinabschnitt aufweist, die als Transportelement mit einem zumindest im Wesentlichen vertikal aufwärts gerichteten Förderweg ausgebildet ist, wobei Zuführungsweg und Förderweg einerseits und Entnahmeweg und Förderweg andererseits voneinander verschieden sind. Aus dem befüllten unteren Teilbereich des Magazinabschnitts werden stabförmige Artikel abgeführt und in darüber liegende Teilbereiche des Speicherstapels, das heißt in den Bereich der im Magazinabschnitt gespeicherten stabförmigen Artikel, transportiert, unabhängig davon, ob stabförmige Artikel dem Speicher entnommen werden oder nicht. Dadurch wird der untere Teilbereich besonders effizient entlastet und dem Aufbau eines hohen lokalen Drucks entgegengewirkt.

Darüber hinaus stellt die Anordnung sicher, dass stabförmige Artikel über die gesamte Füllhöhe des Füllbereichs (entsprechend der Höhe des Speicherstapels) nach oben transportiert werden. Da somit die aufwärts gerichtet geförderten stabförmigen Artikel auf dem Weg nach oben an einer Vielzahl anderer, im Magazinabschnitt gespeicherter stabförmiger Artikel entlang geführt werden und diese dabei auch berühren, werden die gespeicherten stabförmigen Artikel erschüttert und rüttelnd bewegt, so dass lokale Druckunterschiede innerhalb des gesamten Füllbereichs über die gesamte Füllhöhe wirksam abgebaut werden, unabhängig davon, wo der Zuführungsbereich angeordnet ist.

Die Aufgabe wird also durch Einsatz eines Transportelements mit einem zumindest im Wesentlichen vertikal aufwärts gerichteten Förderweg gelöst, das zumindest ein unteres Umlenkelement, ein oberes Umlenkelement, ein Antriebselement und ein Gurtelement oder dergleichen umfasst, in einem Magazinabschnitt einer Speichervorrichtung für queraxial-parallel ausgerichtete stabförmige Artikel zum Vermindern eines auf die stabförmigen Artikel wirkenden lokalen Drucks. Hierdurch wird der lokale Pressdruck im Zuführungsbereich besonders effektiv abgebaut.

Erfindungsgemäß ist es günstig, wenn die Oberfläche des Transportelements für ein reibschlüssiges Anhaften der stabförmigen Artikel während des Förderns der stabförmigen Artikel über den Förderweg ausgebildet ist. Hierdurch können stabförmige Artikel während des Förderns von dem Transportelement abgelöst werden, wenn etwa der Förderweg eines geförderten stabförmigen Artikels blockiert und diese Verklemmung stärker sein sollte als die Haftreibung, mit der der stabförmige Artikel am Transportelement anhaftet. Auf diese Weise ist ein besonders schonender Transport der stabförmigen Artikel möglich, bei dem die Gefahr einer Beschädigung minimiert ist.

Eine besonders einfach zu realisierende Speichervorrichtung ist dann gegeben, wenn das Transportelement zumindest ein unteres Umlenkelement, ein oberes Umlenkelement, ein Antriebselement und ein Gurtelement oder dergleichen aufweist. Der einfache Aufbau des Transportelements erfordert nur ein Weniges an Wartung.

Des weiteren ist es von Vorteil, wenn zumindest einer der Bereiche umfassend Zuführungsbereich und Entnahmebereich in einem unteren Teilbereich des Magazinabschnitts angeordnet ist. Hierdurch wird ein gleichmäßiges Zuführen der stabförmigen Artikel erreicht, unabhängig von der Füllhöhe, sowie die Entnahme auch solcher stabförmiger Artikel ermöglicht, die im Magazinspeicher ganz unten gespeichert sind.

In einer vorteilhaften Ausgestaltungsform umfasst die Speichervorrichtung weiterhin ein Ablöseelement an dem oberen Ende des Förderwegs des Transportelements zum Ablösen der stabförmigen Artikel von dem Transportelement. Der Förderweg ist hierbei die Wegstrecke, über die stabförmige Artikel jeweils tatsächlich transportiert werden, und nicht etwa der maximal mögliche Förderweg, die gesamte Länge des Transportelements. So stellt das Ablöseelement ein gleichmäßiges Ablösen der stabförmigen Artikel an einer definierten Stelle des Förderwegs sicher, bei dem ein Beschädigen der stabförmigen Artikel vermieden wird.

Die Speichervorrichtung umfasst weiterhin eine Parallelführungseinheit zum queraxial-parallelen Ausrichten der vom Transportelement abgelösten stabförmigen Artikel im Magazinabschnitt. Auf diese Weise wird eine Ablage der aufwärts geförderten stabförmigen Artikel an dem oberen Ende des Füllbereichs erreicht, bei dem das Auftreten von nicht queraxial-parallel ausgerichteten stabförmigen Artikeln - so genannten "Querfliegern" - verhindert und eine Beschädigung der stabförmigen Artikel so vermieden wird. Besonders vorteilhaft ist es dabei, wenn die Parallelführungseinheit einen ersten Endabschnitt und einen zweiten Endabschnitt aufweist, wobei der erste Endabschnitt im Magazinabschnitt am Transportelement oder zumindest in dessen Nähe parallel zum Transportelement verschiebbar angeordnet ist, das heißt vertikal oder im Wesentlichen vertikal verschiebbar, und der zweite Endabschnitt vom Transportelement abgewandt und verschiebungsfest im Magazinabschnitt angeordnet ist. Hierdurch ist auf eine einfache Weise eine queraxial-parallele Ausrichtung der stabförmigen Artikel im Magazinabschnitt bei unterschiedlichen Füllhöhen gewährleistet. Dies betrifft insbesondere eine Ausbildung der Parallelführungseinheit als Kettenhemd, wodurch eine besonders stabile und somit wartungsarme Parallelführungseinheit erhalten wird.

Schließlich ist die Speichervorrichtung besonders geeignet, wenn diese modular ausgebildet ist, wodurch Einbau und Ausbau in eine Verarbeitungsanlage bzw. aus dieser besonders einfach ausführbar wird, etwa im Rahmen von Arbeiten zur Umrüstung, Anpassung, Erweiterung, Reparatur, Wartung oder eines Komplettaustauschs.

Diese Aufgabe wird ferner durch ein Verfahren gemäß Anspruch 8 gelöst, in dem stabförmige Artikel mittels eines Transportelements mit einem zumindest im Wesentlichen vertikal aufwärts gerichteten Förderweg von einem unteren Teilbereich des Magazinabschnitts in einen Teilbereich oberhalb des unteren Teilbereichs gefördert werden. Durch dieses Verfahren wird eine Auflockerung der in dem Füllbereich gespeicherten stabförmigen Artikel infolge des aufwärts gerichteten Transports von stabförmigen Artikeln bewirkt, die im unteren Teilbereich des Magazinabschnitts gespeichert sind. Dieser Transport hat einen direkten lokalen Druckabbau im unteren Teilbereich des Magazinabschnitts und ebenfalls - infolge der Berührung anderer gespeicherter stabförmiger Artikel beim aufwärts gerichteten Transport - eine Druckableitung auch im Zuführungsbereich zur Folge, was insgesamt ein besonders einfaches, effektives und schonendes Verfahren zur Druckentlastung bietet.

Hierbei werden stabförmige Artikel queraxial-parallel zueinander ausgerichtet in einer einlagigen und einreihigen Schichtung an einem Gurtelement des Transportelements gefördert. Durch eine einlagige und einreihige Förderung wird die Belastung der geförderten stabförmigen Artikel während des Förderns deutlich verringert.

Weiterhin können die stabförmigen Artikel an dem oberen Ende des zumindest im Wesentlichen vertikal aufwärts gerichteten Förderwegs mittels eines Ablöseelements von dem Transportelement abgelöst werden. Beim Ablösen mittels eines Ablöseelements wird ein gleichmäßiges Ablösen an einer definierten Stelle des Förderwegs gewährleistet, bei dem ein Beschädigen der stabförmigen Artikel vermieden wird.

Wenn die stabförmigen Artikel vom Transportelement abgelöst sind, werden diese außerdem mittels einer Parallelführungseinheit in dem Teilbereich oberhalb des unteren Teilbereichs queraxial-parallel ausgerichtet werden. Dies verhindert das Auftreten von Querfliegern beim Ablösen und kann somit auch im oberen Teilbereich des Magazinabschnitts einer Beschädigung der stabförmigen Artikel entgegenwirken, die ansonsten etwa beim Verklemmen der stabförmigen Artikel eintreten könnte.

Um die Belastung, die auf die stabförmigen Artikel im Magazinabschnitt wirkt, noch weiter zu vermindern, kann das Fördern der stabförmigen Artikel mittels einer Regeleinheit entsprechend der über die Zuführungseinheit in den Magazinabschnitt zugeführten Menge an stabförmigen Artikeln und/oder entsprechend der über eine Entnahmeeinheit dem Magazinabschnitt entnommene Menge an stabförmigen Artikeln geregelt werden. Auf diese Weise wird das Transportelement lediglich dann betätigt, wenn die Anordnung der stabförmigen Artikel im Magazinabschnitt geändert wird, und somit auf die Zeitabschnitte beschränkt, zu denen hohe lokale Drücke auftreten, wenn also stabförmige Artikel dem Magazinabschnitt zugeführt oder entnommen werden. Wenn keine Notwendigkeit für eine lokale Druckentlastung besteht, wird folglich eine überflüssige Belastung stabförmiger Artikel durch den Transport vermieden.

Schließlich wird die Aufgabe durch ein Verfahren zum Speichern von stabförmigen Artikeln in einem Magazinabschnitt einer Speichervorrichtung gelöst, bei dem die stabförmigen Artikel mittels einer Zuführungseinheit in einen Zuführungsbereich über einen Zuführungsweg dem Magazinabschnitt zugeführt werden, ein infolge des Zuführens von stabförmigen Artikeln entstehender und auf die stabförmigen Artikel wirkender lokaler Druck in dem Zuführungsbereich entsprechend dem zuvor beschriebenen Verfahren gemindert wird, und die stabförmigen Artikel über einen Entnahmeweg dem Magazinabschnitt mittels einer Entnahmeeinheit entnommen werden. Mit diesem Ablauf wird das erfindungsgemäße Verfahren zur Druckentlastung in einem Speicherelement zu einem kompletten Speichervorgang ergänzt und kann so in übliche industrielle Fertigungsprozesse eingebunden werden.

Die Erfindung soll im folgenden unter Bezugnahme auf die beigefügten Zeichnungen eines besonders vorteilhaften Ausführungsbeispiels ohne Beschränkung des diesem Ausführungsbeispiel zugrunde liegenden allgemeinen Erfindungsgedankens näher beschrieben werden. Dabei zeigt
Fig. 1 einen Längsschnitt einer erfindungsgemäßen Speichervorrichtung in einem unbefüllten Zustand und
Fig. 2 einen Längsschnitt einer erfindungsgemäßen Speichervorrichtung in einem befüllten Zustand.

In beiden Fällen wurde aus Gründen der Übersichtlichkeit von einer Darstellung der stabförmigen Artikel in der Speichervorrichtung abgesehen.

Die beschriebene Vorrichtung dient zum Speichern von Filterstäben innerhalb eines Prozesses zur Herstellung von Zigaretten. Bei Filterstäben handelt es sich um einzelne Filtereinheiten oder um Mehrfachfiltereinheiten, die einzeln oder geteilt bei Filterzigaretten zum Filtern des Zigarettenrauchs dienen; derartige Filterstäbe haben üblicherweise Durchmesser von 5 mm bis 9 mm, insbesondere 7,5 mm, sowie Längen von 60 mm bis 180 mm, und bestehen aus durchlässigen Materialien wie etwa Celluloseacetatfasern. Ein Speichern im Sinne dieser Erfindung beinhaltet alle üblichen Formen eines Speicherns, also ein Speichern oder Lagern über einen längeren Zeitraum ebenso wie ein temporäres Speichern zum Ausgleichen von zeitlichen Unterschieden zwischen einzelnen Verarbeitungsschritten (so genanntes "Zwischenspeichem"). Anstelle der Filterstäbe können die Vorrichtungen selbstverständlich auch zum Speichern anderer stabförmiger Artikel der Tabak verarbeitenden Industrie eingesetzt werden, die vor einer mechanischen Beschädigung zu schützen sind, also von Artikeln, die zumindest in einem Teilbereich durch eine längliche, im Wesentlichen zylinderartige Stab- oder Stiftform charakterisiert sind, beispielsweise Zigaretten.

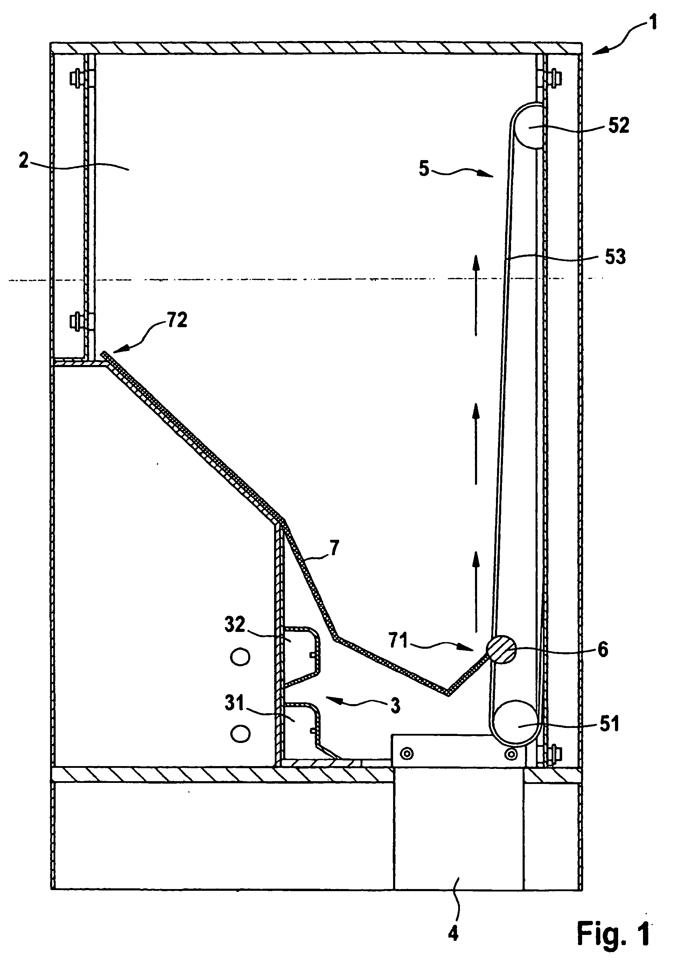

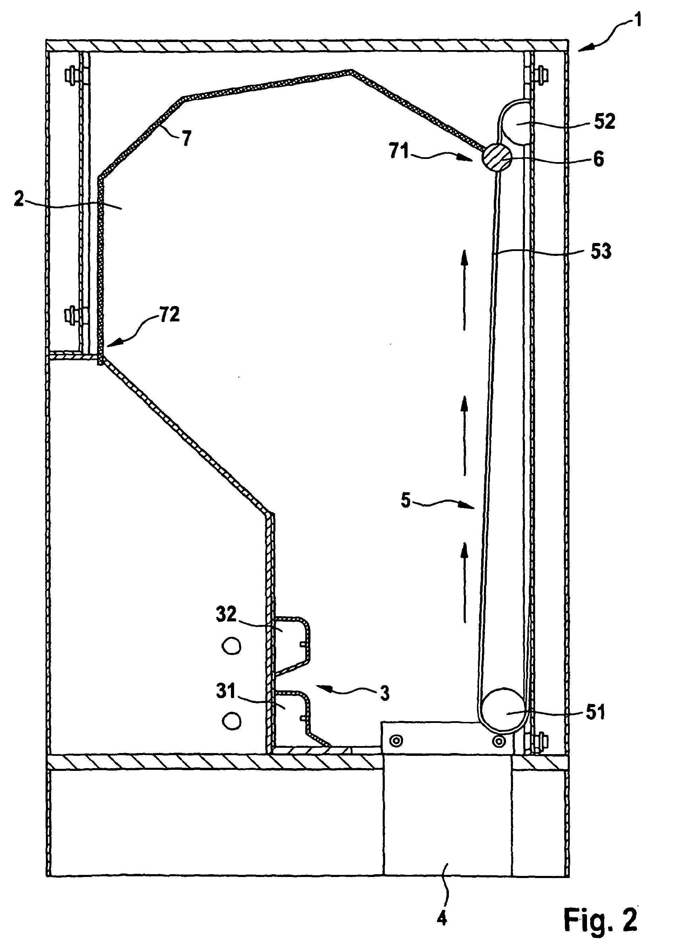

In Fig. 1 und in Fig. 2 ist eine als Modul ausgebildete Speichervorrichtung 1 für Filterstäbe dargestellt, wobei Fig. 1 eine unbefüllte Speichervorrichtung 1 und Fig. 2 dieselbe Speichervorrichtung 1 in einem befüllten Zustand wiedergibt. Die Speichervorrichtung 1 weist einen Magazinspeicher 2 als Magazinabschnitt, eine Zuführungseinheit 3, eine Entnahmeeinheit 4, ein Förderband 5 als Transportelement zur Druckentlastung, einen Führungskamm 6 als Ablöseelement und ein Kettenhemd 7 als Parallelführungseinheit auf. Der Magazinspeicher 2 ist ein mit Filterstäben befüllbarer Speicherraum mit einer höhenbedingt festgelegten Speicherkapazität. Dem Magazinspeicher 2 werden über die Zuführungseinheit 3 extern Filterstäbe zugeführt, die im Magazinspeicher 2 gespeichert werden und schließlich über die Entnahmeeinheit 4 wieder aus dem Speicher ausgetragen werden. Die Filterstäbe sind beim Speichern wie auch bei der Zuführung und Entnahme im Magazinspeicher 2 jeweils queraxial-parallel ausgerichtet, so dass die Zylinderachsen der Filterstäbe im Wesentlichen senkrecht zur Zeichenebene verlaufen (der Übersichtlichkeit halber sind die Filterstäbe in Fig. 1 und 2 nicht dargestellt). Insgesamt ist die Speichereinrichtung als Modul ausgebildet und verfügt daher auch über ein übliches Einbaumaß, vorliegend eine Breite von 600 mm, so dass sie auf einfache Weise in branchenübliche Fertigungsanlagen zur Herstellung von Filterzigaretten integriert werden kann.

Der Magazinspeicher 2 weist einen unteren Teilbereich auf. Innerhalb dieses unteren Teilbereichs befinden sich der Zuführungsbereich und der Entnahmebereich. Als Zuführungsbereich wird der Bereich innerhalb des Magazinspeichers 2 bezeichnet, der unmittelbar der Zuführungseinheit 3 benachbart ist und in den die von außen über die Zuführungseinheit 3 zugeführten Filterstäbe in den Magazinspeicher 2 eingetragen werden. Die Zuführungseinheit 3 ist im unteren Teilbereich des Magazinspeichers 2 angeordnet, um so zu verhindern, dass die eingetragenen Filterstäbe bei einem leeren Magazinspeicher 2 den Ort für ihre Ablage am Boden des Magazinspeichers 2 erst nach Zurücklegen einer Fallstrecke erreichen, wodurch die Filterstäbe ihre queraxial-parallele Ausrichtung verlieren könnten.

Als Zuführungseinheit 3 werden vorliegend zwei Zuführungsmodule eingesetzt, ein unteres erstes Zuführungsmodul 31 und ein oberes zweites Zuführungsmodul 32. Die Zuführung aus den Zuführungsmodulen 31, 32 erfolgt hierbei über intermittierend betriebene drehbare Zuführungstrommeln, wie sie etwa aus der EP 1 397 966 der Anmelderin bekannt sind. Derartige Trommeln werden insbesondere zur Zuführung von empfindlichen Filterstäben eingesetzt, etwa bei Filterstäben aus weichen Materialien. Demzufolge verläuft der Zuführungsweg, also der Weg, den die Filterstäbe beim Zuführen in den Magazinspeicher 2 nehmen, von einem Bereich außerhalb der Speichervorrichtung 1 über die Zuführungseinheit 3 in den Zuführungsbereich im unteren Teilbereich des Magazinspeichers 2. Anstelle diskontinuierlich fördernder Trommeln können natürlich auch beliebige andere geeigneten Zuführungsmodule vorgesehen sein, beispielsweise solche, die eine kontinuierliche Zuführung zwischen parallel angeordneten rotierenden Walzenpaaren ermöglichen.

Als Entnahmebereich wird der Bereich innerhalb des Magazinspeichers 2 bezeichnet, der unmittelbar der Entnahmeeinheit 4 benachbart ist und aus dem die nach außen über die Entnahmeeinheit 4 entnommenen Filterstäbe ausgetragen werden. Demzufolge verläuft der Entnahmeweg, also der Weg, den die Filterstäbe beim Entnehmen aus dem Magazinspeicher 2 nehmen, von dem Entnahmebereich im unteren Teilbereich des Magazinspeichers 2 über die Entnahmeeinheit 4 in einen Bereich außerhalb der Speichervorrichtung 1. Als Entnahmeeinheiten 4 können alle üblichen Einheiten verwendet werden, die eine Entnahme von oberhalb der Entnahmeeinheit 4 gespeicherten Filterstäben ermöglichen.

Während des Speichems wird der Magazinspeicher 2 von unten mit Filterstäben befüllt. Bei einem vollständig leeren Magazinspeicher 2 werden die Filterstäbe mittels der Zuführungseinheit 3 in den Zuführungsbereich im unteren Teilabschnitt des Magazinspeichers 2 gefördert und auf der unteren Innenwand des Magazinspeichers 2 abgelegt. Werden keine Filterstäbe entnommen, steigt mit dem Befüllen auch die Füllhöhe, also die Höhe des mit Filterstäben befüllten Bereichs innerhalb des Magazinspeichers 2 (Füllbereich), so dass der Füllbereich beim Zuführen von Filterstäben nach oben hin erweitert wird. Innerhalb des Füllbereichs liegen die Filterstäbe queraxial-parallel ausgerichtet in einer Schüttung als Filterstapel im Magazinspeicher 2 vor.

Das Förderband 5 ist als offener Riementrieb ausgebildet und weist eine untere Umlenkwalze 51 als unteres Umlenkelement, eine obere Umlenkwalze 52 als oberes Umlenkelement und einen Fördergurt 53 als Gurtelement auf. Das Förderband 5 ist für ein zumindest im Wesentlichen vertikal aufwärts gerichtetes Fördern ausgelegt (Pfeilrichtungen in Fig. 1 und Fig. 2) und weist daher einen Förderweg auf, der gegenüber der Senkrechten um etwa 2 ° geneigt ist. Dieser Förderweg kann aber auch exakt senkrecht verlaufen oder einen Neigungswinkel aufweisen, der kleiner als ein Neigungswinkel gegenüber der Senkrechten von etwa 10 ° ist.

Der Fördergurt 53 umspannt die untere Umlenkwalze 51 und die obere Umlenkwalze 52. Als Fördergurt 53 wird ein mehrlagiges Transportband verwendet, das an seiner Laufseite einen Führungskeil als Längsführungselement aufweist. Grundsätzlich sind als Gurtelement alle geeigneten Gurtelemente, Fördergurte, Riemen oder dergleichen einsetzbar.

Als Zugträger sind in dem Fördergurt 53 zur Verstärkung gegenüber Zugbelastungen textile Gewebeeinlagen aus Leinen vorhanden. Alternativ können polymere Gewebeeinlagen Verwendung finden, etwa solche aus Elastikgarnen, Polyamiden (etwa Aramiden wie Nomex oder Kevlar), Polyetheretherketonen oder Polyestern, oder auch solche aus anderen natürlichen Materialien wie etwa Glasseide oder Baumwollgarn. Der Zugträger kann bei Fördergurten 53, die nur geringen Belastungen ausgesetzt sind, auch entfallen, bei Fördergurten 53, die hohen Zugbelastungen ausgesetzt sind, aber auch durch Stahlseil-Einlagen ersetzt sein. Natürlich können als Einlagen auch Kombinationen aus diesen Materialien verwendet werden.

An der Tragseite ist der Fördergurt 53 mit einem Polymer beschichtet. Hierfür kommen alle üblichen Materialien in Frage, etwa Polyurethane, Kautschuke (etwa Naturkautschuk, Neopren-Kautschuk, Ethylen-Propylen-Dien-Kautschuk, Butadien-Acrylnitril-Kautschuk und carboxylierter Butadien-Acrylnitril-Kautschuk), Silikone, Polyvinylchlorid oder Polyester. Die Tragseite weist zudem eine feinstrukturierte Oberfläche auf. Dies wird bereits durch die Wahl eines elastischen Materials für die Oberfläche des Fördergurts 53 erreicht und zusätzlich durch eine weitere Strukturierung noch verstärkt, indem die Oberfläche zusätzlich unregelmäßig-rauh ausgebildet ist. Hierdurch wird die Reibung zwischen den Filterstäben und der Fördergurtoberfläche vergrößert und somit auch ein reibschlüssiges Anhaften der Filterstäbe an dem Fördergurt 53. Je nach Verwendungsart kann die Fördergurtoberfläche darüber hinaus auch imprägniert werden und ganz oder teilweise beschichtet vorliegen, etwa eine Mittelzonenbeschichtung aufweisen. Anstelle der Oberflächenfeinstruktur oder zusätzlich dazu kann die Oberfläche des Fördergurts 53 zur Verbesserung eines Anhaftens auch ein besonderes Profil aufweisen, etwa quer zur Förderrichtung eingearbeitete Rinnen, die hinsichtlich ihrer Größe mit dem Außendurchmesser der Filterstäbe übereinstimmen. Außerdem kann der Fördergurt 53 auch zu einem kraftschlüssigen Anhaften ausgebildet sein, etwa als Sauggurt.

Das untere Umlenkelement und das obere Umlenkelement sind hier als Umlenkwalzen 51, 52 ausgebildet. Alternativ können jedoch auch andere Umlenkelemente verwendet werden, etwa Umlenktrommeln, Umlenkscheiben oder Umlenkscheibenpaare. Entsprechend der konkreten Ausbildung des Fördergurts 53 können diese an ihrer Mantelfläche zur Führung des Fördergurts 53 angepasst sein, beispielsweise zur Aufnahme von Keilriemen, ballig zur Selbstzentrierung von Flachriemen oder als Zahnrad zur Aufnahme von Zahnriemen oder Rippenriemen ausgebildet sein. Die Umlenkwalzen 51, 52 sind beide innerhalb des Innenraums des Magazinspeichers 2 angeordnet. Stattdessen können die Umlenkwalzen 51, 52 natürlich auch außerhalb des Innenraums angeordnet sein und über abgedichtete Öffnungen in den Innenraum hinein und/oder aus diesem heraus geführt werden.

Vorliegend ist zudem die obere Umlenkwalze 52 als Antriebselement ausgebildet. Das Antriebsaggregat ist für eine Drehgeschwindigkeit der oberen Umlenkwalze 52 von maximal 80 min⁻¹ ausgelegt, wobei die Drehgeschwindigkeit regelbar ist. Das Antriebsaggregat wird üblicherweise mit einer Drehgeschwindigkeit aus einem Bereich von 30 min⁻¹ bis 60 min⁻¹ betrieben, vorzugsweise bei etwa 45 min⁻¹, woraus sich mit einem Durchmesser der oberen Umlenkwalze 52 von 50 mm eine Fördergeschwindigkeit von etwa 120 mm/s ergibt. Selbstverständlich kann das Förderband 5 aber auch über ein separates Antriebselement verfügen, etwa über ein eigenes Antriebsaggregat, beispielsweise einen Elektromotor, über eine Antriebswalze oder über ein Getriebe zur Verbindung mit einem externen Antriebsaggregat. Darüber hinaus kann das Förderband 5 natürlich auch weitere Elemente umfassen, etwa zur Führung oder zum Spannen des Fördergurts 53. Das Förderband 5 insgesamt ist über eine Tragkonstruktion in die Speichervorrichtung 1 eingebunden.

Mit Hilfe des Förderbands 5 werden Filterstäbe aus dem unteren Teilbereich des Magazinspeichers 2 in einen Teilbereich gefördert, der sich im Magazinspeicher 2 oberhalb des unteren Teilbereichs befindet. Im Verlauf dieses zumindest im Wesentlichen vertikal aufwärts gerichteten Transports haften die Filterstäbe an dem sich aufwärts bewegenden vorderen Abschnitt des Fördergurts 53 an und werden so nach oben zu dem oberen Teil des Füllbereichs gefördert. Die Länge des beim Fördern zurückgelegten Wegs, des Förderwegs, ist hierbei von der jeweiligen Füllhöhe abhängig und um so größer, je höher der Magazinspeicher 2 mit Filterstäben befüllt ist. Am oberen Ende des Förderwegs lösen sich die Filterstäbe vom Fördergurt 53 und werden auf dem Füllbereich abgelegt, an der Oberseite des Filterstabstapels. Der aufwärts gerichtete Förderweg ist also von dem horizontalen Zuführungsweg und dem abwärts gerichteten Entnahmeweg verschieden, was zusätzlich eine wirkungsvolle Entkopplung der externen und internen Prozesse ermöglicht, nämlich dem Transport in die Speichervorrichtung 1 hinein und aus dieser hinaus von einer Druckentlastung innerhalb der Speichervorrichtung 1.

Um die queraxial-parallele Ausrichtung der Filterstäbe beim Ablegen der Filterstäbe am oberen Ende des Füllbereichs zu gewährleisten, wird als Parallelführungseinheit ein bandförmiges Kettenhemd 7 verwendet. Der erste Endabschnitt 71 des Kettenhemds 7 ist im Magazinspeicher 2 am Förderband 5 oder in dessen Nähe mittels einer Führung parallel zum Förderband 5 verschiebbar angeordnet. Der zweite Endabschnitt 72 des Kettenhemds 7 ist an der dem Förderband 5 gegenüberliegenden Seite des Magazinspeichers 2 verschiebungsfest angebracht, so dass das Kettenhemd 7 als obere Begrenzung des verfügbaren Speicherraumes dient und die Filterstäbe den Magazinspeicher 2 nicht verlassen können. Das Kettenhemd 7 ist also an nur zwei Seiten angelenkt. Bei dem in Fig. 1 dargestellten fast leeren Speicherelement 1 hängt das Kettenhemd 7 daher in der Mitte durch und liegt auf den wenigen gespeicherten Filterstäben auf, so dass die Filterstäbe aufgrund des Eigengewichts des Kettenhemds 7 über die gesamte Breite des Magazinspeichers 2 verteilt werden.

Mit Ansteigen der Füllhöhe im Füllbereich wird ebenfalls der im Wesentlichen parallel zum Förderband 5 verschiebbare Anlenkpunkt des ersten Endabschnitts 71, der parallel zu der Förderstrecke verschiebbar ist, nach oben verschoben, wodurch sich der Füllbereich nach oben vergrößert. Dabei "schwimmt" das Kettenhemd 7 auf der jeweils oberen Lage der gespeicherten Filterstäbe auf und wird von diesen nach oben getragen. Ist - wie in Fig. 2 dargestellt - die maximale Füllhöhe im Magazinspeicher 2 nahezu erreicht, so ist der Anlenkpunkt am ersten Endabschnitt 71 des Kettenhemds 7 bis an einen Anschlag knapp unterhalb der oberen Umlenkwalze 52 herangeführt und der Kettenhemdbereich neben dem ersten Endabschnitt 71 beult sich infolge der bereits gespeicherten Filterstäbe taschenförmig nach oben aus. Durch die automatische Höhenanpassung des Anlenkpunktes, die von der jeweiligen Füllhöhe im Magazinspeicher 2 abhängig ist, wird daher bei jeder Füllhöhe das Auftreten von Querfliegern vermieden.

Die queraxial-parallele Ausrichtung der Filterstäbe wird dadurch erzielt, dass das Kettenhemd 7 als Parallelführung die vom Fördergurt 53 abgelösten Filterstäbe auf die Oberseite des Füllbereichs führt und den Impuls der Filterstäbe aus Aufwärtstransport und Ablösen gerichtet umlenkt. Die Filterstäbe haben daher beim Ablegen auf dem Filterstabstapel keine seitlich gerichtete Impulskomponente, wie sie für das Auftreten von Querfliegern erforderlich wäre, so dass die Filterstäbe queraxial-parallel zu den bereits an der Oberfläche des Füllbereichs abgelegten Filterstäbe zu liegen kommen.

Der Einsatz eines derartigen metallischen Kettenhemds 7 bietet zusätzlich zu der erhöhten Stabilität den Vorteil, dass es je nach der Größe der einzelnen Kettenringgliedelemente möglich ist, durch die Öffnungen in dem Kettenhemd 7 hindurch optische Daten sammeln zu können, etwa durch den Einsatz von Laserdioden und korrespondierenden Detektoren, um so in dem Filterstabstapel gezielt einzelne Eigenschaften untersuchen und überwachen zu können, etwa den Feuchtigkeitsgehalt der Filterstäbe oder den Füllstand des Magazinspeichers 2. Zur Erhöhung des Eigengewichts kann das Kettenhemd 7 darüber hinaus Zwischengewichte aufweisen.

Anstelle des Kettenhemdes 7 können natürlich auch andere Arten an Parallelführungseinheiten verwendet werden, die das Auftreten von Querfliegern verhindern können, etwa ein entsprechend dem Kettenhemd 7 angelenktes Gurtband von hohem Eigengewicht, Führungsschienen für die beiden Endabschnitte der Filterstäbe oder dergleichen.

In der dargestellten Ausführungsform ist der Führungskamm 6 in das angelenkte Ende des ersten Endabschnitts 71 des Kettenhemds 7 integriert. Der Führungskamm 6 ist hierbei als von der fast senkrechten Förderrichtung wegleitendes Kammelement ausgeführt, das die aufwärts geförderten Filterstäbe von dem Fördergurt 53 abhebt (so genanntes "Auskämmen") und deren Bewegung in Richtung zu der oberen Oberfläche des Füllbereichs hin umlenkt. Infolge der Verbindung des Ablöselements 6 mit dem verschiebbaren ersten Endabschnitt 71 des Kettenhemds 7 erfolgt das Ablösen am oberen Ende des Förderwegs stets dicht oberhalb des oberen Endes des Filterstapels. Natürlich kann das Ablöseelement auch eine beliebige andere Ausbildung aufweisen, die ein Ablösen der Filterstäbe vom Fördergurt 53 ermöglicht, etwa als seitliche Führungsschiene oder dergleichen. Zudem kann das Ablöseelement auch von dem Kettenhemd 7 beabstandet vorliegen und auf andere Weise entsprechend dem Füllstand des Magazinspeichers 2 mitgeführt werden, etwa über eine aktive Regelung.

Nicht dargestellt ist eine Regeleinheit, die den Betrieb des Förderbands 5 in Abhängigkeit davon regelt, ob Filterstäbe dem Magazinspeicher 2 zugeführt oder diesem entnommen werden oder nicht. Da eine besonders große lokale Druckerhöhung dann eintritt, wenn dem Magazinspeicher 2 Filterstäbe zugeführt werden, ist eine Druckentlastung dann besonders wichtig, wenn die Zuführungseinheit 3 in Betrieb ist und weitere Filterstäbe in den Füllbereich einbringt. Wird daher der Betrieb des Förderbands 5 in Abhängigkeit von dem Betrieb der Zuführungseinheit 3 derart geregelt, dass das Förderband 5 nur dann Filterstäbe fördert, wenn auch die Zuführungseinheit 3 Filterstäbe in den Magazinspeicher 2 einträgt, kann eine etwaige Beanspruchung der Filterstäbe beim Fördern mittels des Förderbands 5 vermieden werden. Umgekehrt kann natürlich auch für Regelung des Betriebs des Förderbands 5 in Abhängigkeit von dem Betrieb der Entnahmeeinheit 4 gelten, dass je nach der konkreten geometrischen Anordnung der Zuführungseinheit 3 und der Entnahmeeinheit 4 relativ zueinander eine Druckentlastung sich erübrigen kann, wenn eine Entnahme der Filterstäbe aus dem Magazinspeicher 2 erfolgt, ohne dass von der Zuführungseinheit 3 Filterstäbe eingetragen werden. Eine derartige Regelung kann natürlich auch unter Verwendung eines Drucksensors erfolgen und weitere, komplexere Abläufe berücksichtigen; so kann etwa eine Hysterese in der Schaltautomatik für das Förderband 5 vorgesehen sein.

Für das Speichern in der Speichervorrichtung 1 werden Filterstäbe aus externen Abschnitten der Verarbeitungsanlage den Zuführungsmodulen 31, 32 der Speichervorrichtung 1 zugeführt. Die Zuführungsmodule 31, 32 tragen mittels der intermittierend betriebenen drehbaren Zuführungstrommeln die Filterstäbe queraxial ausgerichtet in den unteren Teilbereich des Magazinspeichers 2 ein, so dass die Filterstäbe im Magazinspeicher 2 queraxial-parallel ausgerichtet sind. Infolge der Tiefe des Magazinspeichers 2, die der Länge der zu speichernden Filterstäbe zugeordnet ist, ist eine Speicherung innerhalb des Filterstabstapels dabei nur einreihig möglich.

Sofern sich bereits Filterstäbe in dem Magazinspeicher 2 befinden, werden diese beim Zuführen weiterer Filterstäbe von ihrem Lageplatz verdrängt, wozu eine hohe Einschubkraft aufgebracht werden muss. Da hierfür ebenfalls die den verdrängten Filterstäben benachbarten Filterstäbe verdrängt werden müssen, baut sich durch das Zuführen neuer Filterstäbe innerhalb des Filterstabstapels lokal ein Druck im Bereich des Zuführungsbereichs auf. Sind nur wenige Filterstäbe in dem Magazinspeicher 2 vorhanden, kann dieser entstehende lokale Druck durch Ableiten an die Oberfläche des Filterstapels abgebaut werden. Je höher der Füllstand des Magazinspeichers 2 jedoch ist, desto stärker ist das dem lokalen Druckabbau entgegenwirkende Eigengewicht des Filterstabstapels oberhalb des Zuführungsbereichs, so dass der lokale Druck dort nicht abgebaut werden kann.

Die Filterstäbe im unteren Teilbereich des Magazinspeichers 2, die sich unmittelbar neben dem unteren Teil des Förderbands 5 befinden, werden infolge des inneren Druckes im Zuführungsbereich auf die Tragseite des sich bewegenden Fördergurts 53 zu gedrückt. Befindet sich an der Oberfläche des Fördergurts 53 noch kein Filterstab, so wird der dem Fördergurt 53 nächstliegende Filterstab gegen die Tragseite des Fördergurts 53 gedrückt, haftet dort an dem Fördergurt 53 an und wird anschließend von dem Fördergurt 53 aufwärts transportiert. Hierdurch entsteht im unteren Bereich des Filterstabstapels eine Lücke, die von den benachbarten Filterstäben aufgefüllt wird; es kommt somit zum Druckabbau im Zuführungsbereich des Magazinspeichers 2.

Der Filterstab am Fördergurt 53 wird beim Aufwärtstransport an dem ruhenden Bereich des Filterstabstapels vorbeigeführt, da die nahezu runde Mantelfläche der Filterstäbe ein Gleiten der Filterstäbe aneinander vorbei ermöglicht. Die Folge ist, dass die Filterstäbe queraxial-parallel zueinander ausgerichtet aufwärts transportiert werden, und dass der Transport unter laminaren Bedingungen stattfindet, also als einlagige Schichtung an dem Fördergurt 53. Es wird also lediglich eine einzelne Schicht aus Filterstäben nach oben gefördert, während die weiteren Filterstäbe in dem Filterstabstapel verbleiben. Infolge der Tiefe des Magazinspeichers 2 ist der Transport zusätzlich einreihig, mit dem Fördergurt 53 werden die Filterstäbe daher als eine einzige einlagige Kette aus einer Filterstabreihe gefördert. Die oberhalb des unteren Teilbereichs des Magazinspeichers 2 liegenden Bereiche des Filterstabstapels werden dabei jedoch infolge des Vorbeiführens der Filterstäbe beim Aufwärtstransport von letzteren berührt und leicht gerüttelt, wodurch ein lokaler Druckabbau im Zuführungsbereich weiterhin unterstützt wird.

Am oberen Ende des Filterstabstapels werden die vertikal aufwärts geförderten Filterstäbe mittels des Führungskamms 6 von dem Fördergurt 53 abgelöst und gegen das Kettenhemd 7 gelenkt. Das Kettenhemd 7 lenkt die Bewegungsrichtung der Filterstäbe um, ohne dass die Filterstäbe ihre queraxial-parallele Ausrichtung verlieren. Schließlich gleiten die Filterstäbe an dem Kettenhemd 7 auf die obere Seite des Filterstabstapels und werden dort druckfrei gespeichert. Der Führungskamm 6 und der erste Endabschnitt 71 des Kettenhemds 7 wird dabei entsprechend der Füllhöhe des Magazinspeichers 2 und damit der Höhe des Filterstabstapels mitgeführt.

Infolge der lokalen Druckverminderung im Filterstabstapel und der damit verbundenen Auflockerung des gesamten Filterstabstapels werden die Filterstäbe nicht beschädigt und verklemmen sich auch nicht im Filterstabstapel, so dass die Filterstäbe über die Entnahmeeinheit 4 aus dem Magazinspeicher 2 ständig entnommen werden und daran anschließenden Verfahrensschritten zugeleitet werden können.

## Patentansprüche

1. Speichervorrichtung (1) zum Speichern queraxial-parallel ausgerichteter stabförmiger Artikel der Tabak verarbeitenden Industrie, insbesondere von Filterstäben, die einen Magazinabschnitt (2) mit einem Zuführungsbereich, dem über einen Zuführungsweg eine Zuführungseinheit (3) zugeordnet ist, und einem Entnahmebereich, dem über einen Entnahmeweg eine Entnahmeeinheit (4) zugeordnet ist, umfasst, wobei die Speichervorrichtung (1) weiterhin eine Entlastungseinheit zur Verminderung eines auf die stabförmigen Artikel wirkenden lokalen Drucks in dem Magazinabschnitt (2) aufweist, die als Transportelement (5) mit einem zumindest im Wesentlichen vertikal aufwärts gerichteten Förderweg ausgebildet ist, wobei Zuführungsweg und Förderweg einerseits und Entnahmeweg und Förderweg andererseits voneinander verschieden sind, **dadurch gekennzeichnet, dass** die Speichervorrichtung (1) weiterhin eine Parallelführungseinheit (7) zum queraxial-parallelen Ausrichten der vom Transportelement (5) abgelösten stabförmigen Artikel im Magazinabschnitt (2) umfasst, wobei die Parallelführungseinheit (7) einen ersten Endabschnitt (71) und einen zweiten Endabschnitt (72) aufweist, wobei der erste Endabschnitt (71) im Magazinabschnitt (2) in der Nähe des Transportelements (5) parallel zum Transportelement verschiebbar angeordnet ist und der zweite Endabschnitt (72) vom Transportelement (5) abgewandt und verschiebungsfest im Magazinabschnitt (2) angeordnet ist.

2. Speichervorrichtung (1) nach Anspruch 1, **dadurch gekennzeichnet, dass** die Oberfläche des Transportelements (5) für ein reibschlüssiges Anhaften der stabförmigen Artikel während des Fördern der stabförmigen Artikel über den Förderweg ausgebildet ist.

3. Speichervorrichtung (1) nach einem der Ansprüche 1 oder 2, **dadurch gekennzeichnet, dass** zumindest einer der Bereiche umfassend Zuführungsbereich und Entnahmebereich in einem unteren Teilbereich des Magazinabschnitts (2) angeordnet ist.

4. Speichervorrichtung (I) nach einem der Ansprüche 1 bis 3, **dadurch gekennzeichnet, dass** das Transportelement (5) zumindest ein unteres Umlenkelement (51), ein oberes Umlenkelement (52), ein Antriebselement und ein Gurtelement (53) oder dergleichen umfasst.

5. Speichervorrichtung (1) nach einem der Ansprüche 1 bis 4, **dadurch gekennzeichnet, dass** die Speichervorrichtung (1) weiterhin ein Ablöseelement (6) an dem oberen Ende des Förderwegs des Transportelements (5) zum Ablösen der stabförmigen Artikel von dem Transportelement (5) umfasst.

6. Speichervorrichtung (1) nach Anspruch 1, **dadurch gekennzeichnet, dass** die Parallelführungseinheit (7) als Kettenhemd ausgebildet ist

7. Speichervorrichtung, (1) nach einem der Ansprüche 1 bis 6, **dadurch gekennzeichnet, dass** die Speichervorrichtung (1) modular ausgebildet ist.

8. Verfahren zum Vermindern eines infolge des Zuführens von stabförmigen Artikeln der Tabak verarbeitenden Industrie, insbesondere von Filterstäben, mittels einer Zuführungseinheit (3) in den unteren Teilbereich eines Magazinabschnitts (2) einer Speichervorrichtung (1) entstehenden und auf die stabförmigen Artikel wirkenden lokalen Drucks in einem der Zuführungseinheit (3) zugeordneten Zuführungsbereich, wobei die stabförmigen Artikel mittels eines Transportelements (5) mit einem zumindest im Wesentlichen vertikal aufwärts gerichteten Förderweg von einem unteren Teilbereich des Magazinabschnitts (2) in einen Teilbereich oberhalb des unteren Teilbereichs gefördert werden, **dadurch gekennzeichnet, dass** die stabförmigen Artikel an dem oberen Ende des zumindest im Wesentlichen vertikal aufwärts gerichteten Förderwegs mittels eines Ablöseelements (6) von dem Transportelement (5) abgelöst und nach dem Ablösen vom Transportelement (5) mittels einer Parallelführungseinheit (7) in dem Teilbereich oberhalb des unteren Teilbereichs queraxial-parallel ausgerichtet werden.

9. Verfahren nach Anspruch 8, **dadurch gekennzeichnet dass** stabförmige Artikel queraxial-parallel zueinander ausgerichtet in einer einlagigen und einreihigen Schichtung an einem Gurtelement (53) des Transportelements (5) befördert werden.

10. Verfahren nach Anspruch 8 oder 9, **dadurch gekennzeichnet, dass** das Fördern der stabförmigen Artikel mittels einer Regeleinheit entsprechend der über die Zuführungseinheit (3) in den Magazinabschnitt (2) zugeführten Menge an stabförmigen Artikeln und/oder entsprechend der über eine Entnahmeeinheit (4) dem Magazinabschnitt (2) entnommene Menge an stabförmigen Artikeln geregelt wird.

11. Verfahren zum Speichern von stabförmigen Artikeln der Tabak verarbeitenden Industrie, insbesondere von Filterstäben, in einem Magazinabschnitt (2) einer Speichervorrichtung (1), **dadurch gekennzeichnet, dass** die stabförmigen Artikel mittels einer Zuführungseinheit (3) in einen Zuführungsbereich über einen Zuführungsweg dem Magazinabschnitt (2) zugeführt werden,
ein infolge des Zuführens von stabförmigen Artikeln entstehender und auf die stabförmigen Artikel wirkender lokaler Druck in dem Zuführungsbereich entsprechend einem Verfahren nach einem der Ansprüche 8 bis 10 gemindert wird, und
die stabförmigen Artikel über einen Entnahmeweg dem Magazinabschnitt (2) mittels einer Entnahmeeinheit (4) entnommen werden.

## Claims

1. Storage apparatus (1) for storing rod-shaped articles of the tobacco-processing industry oriented with their axes transversely and parallel, in particular filter rods, which comprises a hopper section (2) having a feed region with which a feed unit (3) is associated via a feed path, and a removal region with which a removal unit (4) is associated via a removal path, wherein the storage apparatus (1) further comprises a relief unit for reducing a local pressure acting on the rod-shaped articles in the hopper section (2), which is designed as a transport element (5) having a conveying path oriented at least substantially vertically upwards, the feeding path and conveying path on the one hand and the removal path and conveying path on the other hand differing from each other, **characterised in that** the storage apparatus (1) further comprises a parallel-guiding unit (7) for orienting the rod-shaped articles released from the transport element (5) with their axes transversely and parallel in the hopper section (2), wherein the parallel-guiding unit (7) has a first end section (71) and a second end section (72), wherein the first end section (71) is arranged in the hopper section (2) in the vicinity of the transport element (5) so as to be slidable parallel to the transport element, and the second end section (72) faces away from the transport element (5) and is arranged non-slidably in the hopper section (2).

2. Storage apparatus (1) according to claim 1, **characterised in that** the surface of the transport element (5) is designed for friction-locking adhesion of the rod-shaped articles during conveying of the rod-shaped articles over the conveying path.

3. Storage apparatus (1) according to either of claims 1 or 2, **characterised in that** at least one of the regions comprising feed region and removal region is arranged in a lower portion of the hopper section (2).

4. Storage apparatus (1) according to any one of claims 1 to 3, **characterised in that** the transport element (5) comprises at least one lower deflecting element (51), an upper deflecting element (52), a driving element and a belt element (53) or the like.

5. Storage apparatus (1) according to any one of claims 1 to 4, **characterised in that** the storage apparatus (1) further comprises a release element (6) at the upper end of the conveying path of the transport element (5) for release of the rod-shaped articles from the transport element (5).

6. Storage apparatus (1) according to claim 1, **characterised in that** the parallel-guiding unit (7) is designed as a chain-link flap.

7. Storage apparatus (1) according to any one of claims 1 to 6, **characterised in that** the storage apparatus (1) is of modular construction.

8. Method for reducing a local pressure arising as a result of the feeding of rod-shaped articles of the tobacco-processing industry, in particular filter rods, by means of a feed unit (3) into the lower portion of a hopper section (2) of a storage apparatus (1), and acting on the rod-shaped articles, in a feed region associated with the feed unit (3), wherein rod-shaped articles are conveyed by means of a transport element (5) having a conveying path oriented at least substantially vertically upwards, from a lower portion of the hopper section (2) into a portion above the lower portion, **characterised in that** the rod-shaped articles are released from the transport element (5) by means of a release element (6) at the upper end of the at least substantially vertically upwardly directed conveying path and, after release from the transport element (5), are oriented with their axes transversely and parallel by means of a parallel-guiding unit (7) in the portion above the lower portion.

9. Method according to claim 8, **characterised in that** rod-shaped articles are conveyed in a single-layer and single-row layered arrangement on a belt element (53) of the transport element (5), oriented with their axes transversely and parallel to each other.

10. Method according to any one of claims 8 or 9, **characterised in that** conveying of the rod-shaped articles is controlled by means of a controller unit according to the quantity of rod-shaped articles fed into the hopper section (2) via the feed unit (3) and/or according to the quantity of rod-shaped articles removed from the hopper section (2) via a removal unit (4).

11. Method for storing rod-shaped articles of the tobacco-processing industry, in particular filter rods, in a hopper section (2) of a storage apparatus (1), **characterised in that** the rod-shaped articles are fed to the hopper section (2) by means of a feed unit (3) into a feed region via a feed path,
a local pressure arising as a result of feeding rod-shaped articles and acting on the rod-shaped articles is reduced in the feed region by a method according to any one of claims 8 to 10, and
the rod-shaped articles are removed from the hopper section (2) via a removal path by means of a removal unit (4).

## Revendications

1. Dispositif de stockage (1) pour stocker des articles en forme de tiges de l'industrie de transformation du tabac, orientés de manière parallèle à l'axe transversal, en particulier des bâtonnets-filtres, qui comprend une partie de magasin (2) comportant une zone d'amenée à laquelle est associée, via une voie d'amenée, une unité d'amenée (3), et une zone de prélèvement à laquelle est associée, via une voie de prélèvement, une unité de prélèvement (4), le dispositif de stockage (1) présentant en outre une unité de détente pour réduire une pression locale agissant sur les articles en forme de tiges dans la partie de magasin (2), laquelle unité est conçue en tant qu'élément de transport (5) pourvu d'une voie de transport orientée vers le haut dans une direction au moins sensiblement verticale, la voie d'amenée et la voie de transport d'une part, et la voie de prélèvement et la voie de transport d'autre part, étant séparées les unes des autres, **caractérisé en ce que** le dispositif de stockage (1) comprend en outre une unité de guidage parallèle (7) pour l'orientation parallèle à l'axe transversal des articles en forme de tiges détachés de l'élément de transport (5) dans la partie de magasin (2), l'unité de guidage parallèle (7) présentant une première partie d'extrémité (71) et une deuxième partie d'extrémité (72), la première partie d'extrémité (71) étant montée pour se déplacer dans la partie de magasin (2) à proximité de l'élément de transport (5) de manière parallèle à l'élément de transport et la deuxième partie d'extrémité (72) étant opposée à l'élément de transport (5) et montée fixe dans la partie de magasin (2).

2. Dispositif de stockage (1) selon la revendication 1, **caractérisé en ce que** la surface de l'élément de transport (5) est conçue pour l'adhérence par friction des articles en forme de tiges pendant le transport des articles en forme de tiges sur la voie de transport.

3. Dispositif de stockage (1) selon l'une des revendications 1 ou 2, **caractérisé en ce qu'**au moins l'une des zones comprenant la zone d'amenée et la zone de prélèvement est disposée dans une région partielle inférieure de la partie de magasin (2).

4. Dispositif de stockage (1) selon l'une des revendications 1 à 3, **caractérisé en ce que** l'élément de transport (5) comprend au moins un élément de renvoi inférieur (51), un élément de renvoi supérieur (52), un élément d'entraînement et un élément formant courroie (53) ou équivalent.

5. Dispositif de stockage (1) selon l'une des revendications 1 à 4, **caractérisé en ce que** le dispositif de stockage (1) comprend en outre un élément de détachement (6) au niveau de l'extrémité supérieure de la voie de transport de l'élément de transport (5) pour détacher les articles en forme de tiges de l'élément de transport (5).

6. Dispositif de stockage (1) selon la revendication 1, **caractérisé en ce que** l'unité de guidage parallèle (7) est conçue à la façon d'une cotte de mailles.

7. Dispositif de stockage (1) selon l'une des revendications 1 à 6, **caractérisé en ce que** le dispositif de stockage (1) est de type modulaire.

8. Procédé destiné à réduire une pression locale, créée par l'amenée d'articles en forme de tiges de l'industrie de transformation du tabac, en particulier de bâtonnets-filtres, au moyen d'une unité d'amenée (3) dans la région partielle inférieure d'une partie de magasin (2) d'un dispositif de stockage (1) et agissant sur les articles en forme de tiges, dans une zone d'amenée associée à l'unité d'amenée (3), les articles en forme de tiges étant transportés au moyen d'un élément de transport (5) pourvu d'une voie de transport orientée vers le haut dans une direction au moins sensiblement verticale d'une région partielle inférieure de la partie de magasin (2) dans une région partielle située au-dessus de la région partielle inférieure, **caractérisé en ce que** les articles en forme de tiges sont détachés de l'élément de transport (5) au niveau de l'extrémité supérieure de la voie de transport orientée vers le haut dans une direction au moins sensiblement verticale au moyen d'un élément de détachement (6) et, après détachement de l'élément de transport (5) sont orientés de manière parallèle à l'axe transversal au moyen d'une unité de guidage parallèle (7) dans la région partielle située au-dessus de la région partielle inférieure.

9. Procédé selon la revendication 8, **caractérisé en ce que** des articles en forme de tiges sont transportés, orientés de manière parallèle à l'axe transversal les uns par rapport aux autres, selon une disposition monocouche et sur une rangée sur un élément formant courroie (53) de l'élément de transport (5).

10. Procédé selon la revendication 8 ou 9, **caractérisé en ce que** le transport des articles en forme de tiges est régulé au moyen d'une unité de régulation en fonction de la quantité d'articles en forme de tiges acheminée dans la partie de magasin (2) via l'unité d'amenée (3) et/ou en fonction de la quantité d'articles en forme de tiges prélevée de la partie de magasin (2) via une unité de prélèvement (4).

11. Procédé de stockage d'articles en forme de tiges de l'industrie de transformation du tabac, en particulier de bâtonnets-filtres, dans une partie de magasin (2) d'un dispositif de stockage (1), **caractérisé en ce que** les articles en forme de tiges sont acheminés à la partie de magasin (2) au moyen d'une unité d'amenée (3) dans une zone d'amenée via une voie d'amenée,
une pression locale créée par l'amenée d'articles en forme de tiges et agissant sur les articles en forme de tiges dans la zone d'amenée est réduite selon un procédé selon l'une des revendications 8 à 10, et
les articles en forme de tiges sont prélevés de la partie de magasin (2) via une voie de prélèvement au moyen d'une unité de prélèvement (4).
